# NEW EUROPEAN PATENT SPECIFICATION

(11) **EP 0 436 476 B2**
(45) Date of publication and mention of the opposition decision: **17.07.1996**
(45) Mention of the grant of the patent: 25.08.1993
(21) Application number: 90830605.3
(22) Date of filing: 20.12.1990
(51) Int. Cl.: B65B 41/18

(54) **Device carrying out the heat sealing of a film onto a blister band, particularly a polypropylene band**
Vorrichtung zum Heisssiegeln eines Films auf einem Band von Blisterpackungen, insbesondere einem Band aus Polypropylen
Dispositif pour le thermoscellage d'un film sur une bande pour blisters, en particulier une bande en polypropylène

(30) Priority: 29.12.1989 IT 379389
(43) Date of publication of application: 10.07.1991
(73) Proprietor: Marchesini, Massimo, I-40065 Pianoro (Bologna) (IT)
(72) Inventor: Marchesini, Massimo, I-40065 Pianoro (Bologna) (IT)
(74) Representative: Dall'Olio, Giancarlo

(56) References cited:
- EP-A- 0 370 970
- DE-A- 2 225 641
- FR-A- 2 411 132
- US-A- 4 349 997
- Brochure "SERVAC 78 AS Aseptisch arbeitende Thermoform-, Füll- und Schliessmaschine für sichere Sterilverpackung hochwertiger Produkte", Robert Bosch GmbH, Verpackungsmaschinen, D-7053 Waiblingen

## Description

This invention relates to the technical field of automatic machines which carry out the packaging of various items (e.g. medicinal preparations, such as capsules, pills and the like) into sealed portions of a blister band; said portions are commonly called blister packs.

The machines mentioned above, in the order, form blisters on a band of thermoformable material, fill the blisters with products, check the presence of products in the blisters, apply a film to to seal the blisters, cut the sealed blister band into single blister packs and discard the blister packs which result to be defective.

In particular, this invention proposes some improvements of the device by which the sealing film is applied on the blister band.

Such application is carried out by heat sealing, i.e. by clamping the film and the blister band between an upper sealing plate and a lower plate provided with hollows shaped like the blisters.

Therefore, the need arises to check the perfect centering of the blister band with respect to the means carrying out the heat sealing, since an improper centering causes the crushing, total or partial, of the blisters.

Therefore, the conventional machines usually comprise means having the purpose to check the centering of the blister band with respect to the heat-sealing means, so to detect any imperfection of the blister pack just made and, when necessary, to stop the heat-sealing means to allow the staff to intervene and remove the reasons for the improper centering.

Several means are known which carry out such a control, in particular those mentioned in the preamble of the EP Patent Application No.89830505.7 filed on the 17th November 1989 in the name of the Applicant and published as EP-A- 0 370 970.

In that application a technical solution is proposed, which provides for sensor means, operating upstream of the sealing station, suited to signal the passage of a relief made on the blister band when the blisters are formed and positioned in a certain order with respect to a plurality of such blisters.

The technical solution covered by said European Patent Application solves, in an effective way, the technical problem concerning the control of the centering of the blister band with respect to the heat-sealing means.

In the case of blister bands made of PVC (polyvinyl chloride), used in the large majority of the machines for the packaging of items into blisters, the problems related to the shrinkage (longitudinal shortening) of the PVC, which occurs in conditions of non-steady operation of the packaging machine, e.g. after a stopping and a subsequent starting of the latter, are totally "absorbed" by the tolerances allowed in said centering.

Therefore it is not necessary, when the machine is started, to intervene and move longitudinally the heat-sealing means relative to the blister band, or vice versa, since the extent of shrinkage of the PVC is such as to remain within the interval of variation of tolerances.

The PVC, as it is known, is not biodegradable, and this involves environmental problems connected with its disposal.

The Applicant, as a result of a constant work of research, proposes a blister bands made of materials at least partially biodegradable, e.g. polypropylene.

The shrinkage ratio of this material is substantially higher than that of PVC (about 6/8 times higher), therefore the longitudinal shrinkage of the blister band after its cooling (this occurs when the machine is stopped) is such as to cause translations of the blister band exceeding the tolerances allowed for said centering.

More precisely, said translations have their negative effects downstream of the heat-sealing means, since the means for advancing the sealed band, located downstream of the latter means, define, with the machine stopped, a fastening point for said sealed band.

The reactivation of the sealing means, in synchrony with the reactivation of the machine, is not feasible, since this would cause the crushing of the blisters, and this would continue until the previous situation of steady state of the packaging machine is restored, a situation detected, e.g. by said means for checking the centering.

The resolution of the technical problem just mentioned above would allow to carry out the sealing of blister bands made of polypropylene in any operating situation of the packaging machine.

The Firm ROBERT BOSCH has manufactured a machine identified as SERVAC 78 AS, that is generally described in a brochure dated November 1985. This machine operates with a band of thermoformable material and includes a thermoforming station, a filling station, a heat-sealing station, means for feeding the cover film situated before the heat-sealing station and means for advancing the band in step, situated downstream of the heat-sealing station.

Each station has been configurated as a movable station that can be shifted forwards or rearward at each working cycle to compensate the shrinkage. The task of the station control is to transport the formed and filled cups into the subsequent operating station in perfect centric position.

The Applicant resolves the same problem by the present invention, whose object is to propose some improvements of the device suited to seal, with a film, blister bands, with said improvements being such as to carry out said sealing in an optimal way independently from the type of material composing the blister band and in whatever operating situation of the associated packaging machine.

A further object of the invention is to propose some improvements which allow to carry out the above process through a technical solution particularly simple and easily associable with the complex of elements defining the heat-sealing means.

The objects just mentioned above are achieved by the device that is the subject of the invention, in accordance with claim 1. Preferred embodiments of the invention are characterized in the dependent claims.

The improved device proposed hereby allows to carry out the heat sealing of a film to the blister band independently from both the type of material (e.g. polypropylene) of which the band is made, and from the operating conditions of the associated packaging line.

This is made possible by moving the sealing station in accordance with the longitudinal shortening of the blister band in case of stopping the working of the packaging line.

In the drawings enclosed herewith a device has been described, which carries out the heat sealing of a band moved steplessly by the means for advancing the band just sealed with the film.

The device that is the subject of the invention can be used also in case that the band is moved step by step; in that case it is sufficient to provide for a frame supported by suitable means, with the possibility of translating longitudinally, and a cross bar, integral with the frame.

The features of the invention are pointed out below, with reference to the drawings enclosed herewith, where:
- Figure 1 shows a schematic front view of the sealing means in their two limit operating positions, respectively retreated and advanced;

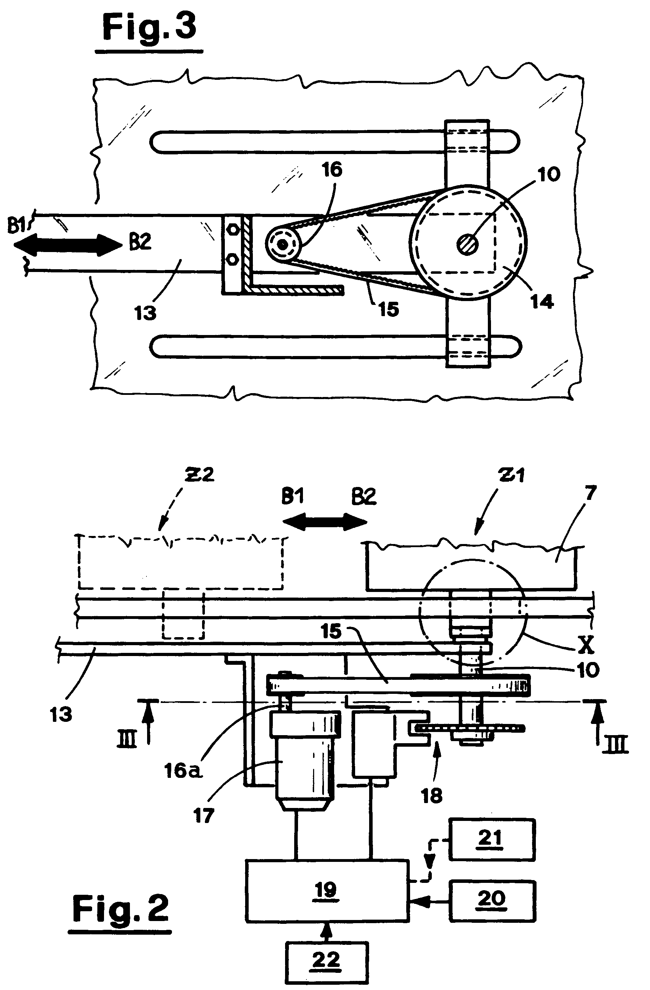

- Figure 2 shows a top view of the improvements proposed associated with the means for moving the sealing means;
- Figure 3 shows a view of the section III-III of fig. 2;
- Figures 4a, 4b show a top view, in enlarged scale, of the detail X of fig. 2 in the two limit positions of longitudinal regulation of the sealing means with respect to said moving means.

With reference to the figures, no. 1 indicates a device carrying out the heat-sealing of a film 2 to a blister band 3 (e.g. of polypropylene).

The device 1 operates along a line for the packaging of items into blister packs, indicated by the reference no. 4 and partially illustrated, along which the band 3 is pulled (sense A).

Said line comprises, upstream of the device 1, a station (not illustrated) for the forming of blisters 3a on said band 3, a station (also not illustrated) for the filling of blisters 3a with relative items 5, and means 6 for feeding said film 2, with this latter positioned above the band 3 and transversally centered with respect to the same.

Furthermore, said line is provided, downstream of the device 1, with means 50 for advancing the band 3 just sealed with the film 2.

The device 1 consists of a frame 7 supported by known means, not illustrated, with the possibility for the same frame to slide longitudinally, i.e. parallel to the advancement sense A of the band 3.

The frame 7 bears an upper sealing plate 8 and a lower plate 9 provided with hollows 9a (turned upwards) complementary with the blisters 3a; said plates are moved vertically, in a way known in itself, according to opposite senses H1,H2 and K1,K2.

With the frame 7 a cross bar 11 is integral, with which a pivot 12, normal to the sense A, is coupled in a revolving mount.

The pivot 12 is borne eccentrically by a shaft 10 coupled in a revolving mount with a longitudinal bar 13 having the purpose to move cyclically (senses B1,B2) the frame 7.

To the shaft 10 a gear wheel 14 is splined, which engages a toothed belt 15, which in its turn engages a pinion 16 whose shaft 16a is the output of a geared motor 17, with this latter supported by the bar 13.

The angular position of the shaft 10 is detected by an "encoder" 18; the relative measurement is sent to a data processing unit 19 having the purpose, according to said measurement and to any further data supplied by an electronic-electric apparatus 20, to control the geared motor 17.

It is known that the polypropylene shows, with the decreasing of temperature, a ratio of shrinkage substantially higher than the materials commonly used (usually PVC) to make the band 3.

In the translation from the blister forming station to the device 1, the band 3 progressively cools down; in conditions of steady state operation of the packaging line 4, the portion of band 3 which undergoes the action of the plates 8,9 shows a predetermined temperature.

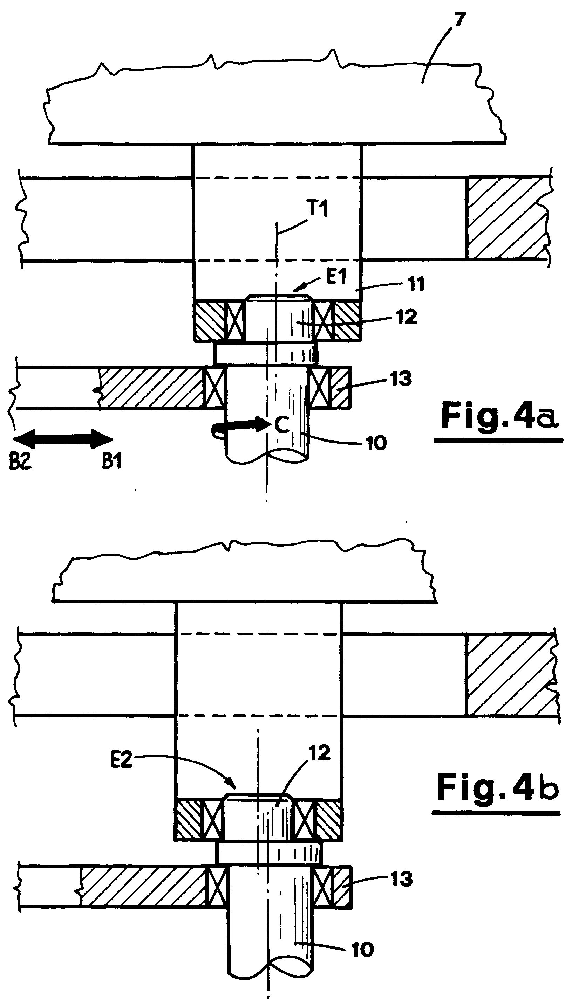

In steady state conditions, the pivot 12 results to be positioned in the limit position E1 shown in figure 4a.

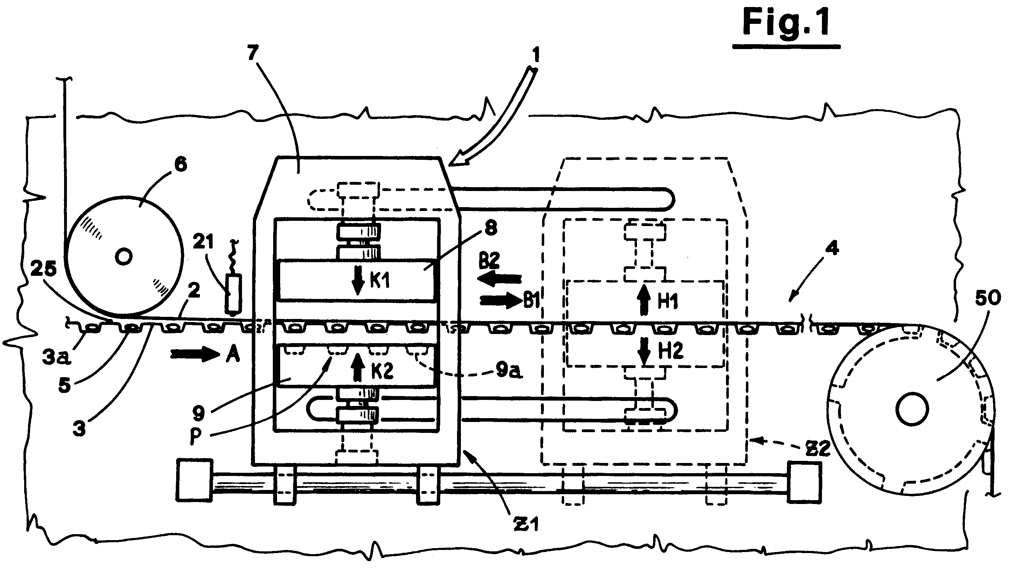

As it has been mentioned above, the longitudinal bar 13 moves the frame 7 in the senses B1,B2 from a retreated position Z1 (indicated by a continuous line in fig. 1) to an advanced position Z2 (indicated by a broken line in fig. 1); the amplitude of the travel results to be constant.

In steady state conditions in the retreated position Z1 the hollows 9a of the lower plate 9 result to be centered, within predetermined tolerances, with respect to the blisters 3a of the overlying band 3.

With the translation of the plates 8,9 in the senses K1, K2, said film 2 and band 3 are clamped between these latter; the position in which such clamping takes place defines a sealing station P to which corresponds the transverse position T1 of the axis of the pivot 12 (see figure 4a).

The plates are kept clamped during the forward travel of the frame (sense B1). In the advanced position Z2 the plates are moved (senses H1,H2) away from each other; such a position is maintaned during the backward travel of the frame (sense B2); in this way it is possible to obtain the continuous heat sealing of the film 2 to the band 3.

In the case of stopping, due to whatever reason, of the working of the packaging line 4, the band 3 cools down, thus it shrinks, with reference to the fastening point of the sealed band defined, with the machine stopped, by said advancing means 50.

Said shrinkage is not "absorbed" by the tolerances allowed; in other words, the clamping of the plates made in the position which previously defined the sealing station P, would cause the crushing of the blisters 3a (and of the items contained there) subjected to the heat sealing.

This is avoided by the present improved device. In fact, the rotation, according to C, of the shaft 10 causes the axis T1 of the pivot 12 to advance with respect to the bar 13; a half revolution of the shaft 10 brings about the maximum advancement (of said axis T1) equal to the double of the eccentricity existing between the axes of the shaft 10 and the pivot 12 (position E2, figure 4b).

The above-mentioned maximum advancement is such as to compensate the maximum shrinkage (longitudinal shortening) of the band 3, a shrinkage which occurs between the position taken at steady state by the sealing station P and said advancing means 50.

The value of such advancement, determined by the data processing unit 19 and carried out through the geared motor 17, can be interlocked with a thermal probe 22 measuring the environment temperature or, more advantageously, the temperature of the band 3.

In this way the frame 7 is moved forward, with respect to the retreated position at steady state, therefore also the sealing station P results to be moved forward.

When the line 4 is started again it is necessary that the sealing station P is progressively moved backward through a suitable rotation of the shaft 10 according to angular values determined by the data processing unit 19 and detected by the "encoder" 18.

Such rotation can be subjected, as an alternative to what has been said above, to the apparatus 20 which stores the angular values (deduced from experimental tests), according to which the shaft 10 has to rotate after every operating cycle of heat sealing (preferably during the backward travel of the frame), or it can be subjected to sensor means 21 which, detecting the position of prominences 25 equally spaced, provided on the band 3, are able to supply the data processing unit 19 with data from which it is possible to calculate the extent of longitudinal shrinkage of the band 3 with respect to the steady state conditions.

As stated above, the device that is the subject of the invention can be used also in case that the band is moved step by step; in that case it is sufficient to provide for the frame 7 supported by suitable means, with the possibility of translating longitudinally, and a cross bar, integral with the same frame, with which said pivot 12 results to be coupled in a revolving mount.

## Claims

1. Device for carrying out the heat sealing of a film (2) to a blister band (3), in particular a band of polypropylene, said device being designed to operate along a line (4) for packaging items (5) into blister packs obtained from a band (3) of thermoformable material made to advance continuously along said line, with said line including:
a thermoforming station for forming blisters (3a) on said band (3);
a station for filling said blisters with items (5);
feeding means (6), located upstream of said device (1), for continuously feeding said film (2) above the blister band (3) and transversally centred with respect to the blister band;
advancing means (50), located downstream of said device, for advancing said blister band (3), already sealed with said film (2);
while the device includes:
a frame (7) bearing an upper sealing plate (8) and a lower plate (9), said lower plate (9) being provided with hollows (9a) shaped like the blisters (3a), with said plates (8, 9) designed to clamp said film (2) and blister band (3) at a sealing station (P) in which the hollows (9a) of the lower plate (9) result to be centred with respect to the blisters (3a) of the overlying blister band (3), said frame (7) being cyclically moved parallel to the advancement direction (A) of the blister band (3) from a retreated position (Z1), corresponding to said sealing station (P), to an advanced position (Z2) according to a forward travel, in which said plates (8,9) are kept clamped, and from said advanced position (Z2) to said retreated position (Z1), according to a backward travel, in which said plates are moved away from each other;
means for moving said sealing station (P), in case of stopping of the working of said packaging line, along the advancing direction (A) of the blister band (3) according to the longitudinal shortening of the same blister band, due to said stopping, with respect to the length of said blister band, in the steady state operation of said packaging line (4), comprised between said sealing station (P), at the position taken at steady state operation of said packaging line, and said advancing means (50), located downstream of said device;
the said device being characterised in that said means for moving said sealing station comprise:
a shaft (10), supported in a revolving mount by a longitudinal bar (13) having the purpose to move cyclically said frame (7), said shaft (10) eccentrically bearing a pivot (12) restrained in a revolving mount to a cross bar (11) integral with said frame (7);
actuating means (14,15,16,16a,17), interlocked with an electronic data processing unit (19), for the intermittent rotation of said shaft (10) according to angular values determined by said data processing unit (19), so as to cause a longitudinal sliding of said retreated position (Z2);
sensor means (18), connected with said data processing unit, for detecting the angular position of said shaft (10).

2. Device according to claim 1, characterized in that it comprises an electric-electronic apparatus (20), connected with said data processing unit (19), said electric-electronic apparatus being designed to determine, through said data processing unit (19) and said actuating means (17), prefixed angular rotations of said shaft (10) at every operating cycle of said device according to values stored in said data processing unit (19).

3. Device according to claim 1, characterized in that it comprises a thermal probe (22), connected with said data processing unit (19), designed to measure the environment temperature in order to fix the rotations of said shaft (10) according to the value of temperature measured.

4. Device according to claim 1, characterized in that it comprises a thermal probe (22), connected with said data processing unit (19), designed to measure the temperature of said blister band, in order to fix the rotations of said shaft (10) according to the value of temperature measured.

5. Device according to claim 1, characterized in that it comprises a thermal probe (22), connected with said data processing unit (19), designed to measure the environment temperature and the temperature of the blister band, in order to fix the rotations of said shaft (10) according to the values of temperature measured.

6. Device according to claim 1, characterized in that it includes sensor means (21) detecting equidistant prominences (25) provided in said blister band, said sensor means (21) being connected with said data processing unit (19) in order to fix the rotation of said shaft (10) according to the detection of said prominences by said sensor means.

7. Device according to claim 1, characterized in that said actuating means for the rotation of said shaft (10) comprise a gear wheel (14), splined to said shaft (10), a toothed belt (15) engaging with said gear wheel (14) as well as with a pinion (16) whose shaft (16a) is the output of a geared motor (17) controlled by said data processing unit (19).

## Patentansprüche

1. Vorrichtung zum Heißsiegeln einer Folie (2) mit einer Blisterbahn (3), insbesondere einer Folienbahn aus Polypropylen, wobei genannte Vorrichtung dazu vorgesehen ist, in einer Linie (4) zu arbeiten, die zum Abpacken von Produkten (5) in Blisterpackungen dient, die aus einer in genannter Linie vorlaufenden Bahn (3) aus thermoformbarem Material angefertigt werden, wobei genannte Linie folgendes umfaßt: eine Thermoformstation zum Formen der Näpfe (3a) in der genannten Bahn (3), eine Station zum Befüllen genannter Näpfe mit den genannten Produkten (5), Zuführmittel (6) vor der genannten Heißsiegelvorrichtung (1) zum Zuführen der genannten Folie (2) über der Blisterbahn und Vorschubmittel (50), nach der genannten Vorrichtung zum Vorschub der genannten Blisterbahn (3), die bereits mit der genannten Folie (2) verschlossen ist; genannte Vorrichtung umfaßt einen Rahmen (7), auf dem eine obere Siegelplatte (8) und eine untere Platte (9) angeordnet sind, wobei genannte untere Platte (9) mit Öffnungen (9a) versehen ist, welche die Form der Näpfe (3a) aufweisen, wobei genannte Platten (8, 9) dazu dienen, genannte Folie (2) und genannte Blisterbahn (3) in einer Siegelstation (P) festzuspannen, in welcher die Öffnungen (9a) der unteren Platte (9) zu den Näpfen (3a) der darüberliegenden Blisterbahn (3) zentriert sind, wobei genannter Rahmen (7) zyklisch parallel zur Vorschubrichtung (A) der Blisterbahn (3) verfahren wird, und zwar von einer zurückgefahrenen Stellung (Z1), welche der genannten Siegelstation (P) entspricht, in eine vorgefahrene Stellung (Z2) entsprechend einem Vorlaufhub, bei dem die genannten Platten (8,9) geschlossen bleiben sowie von der genannten vorgefahrenen Position (Z2) in die genannte zurückgefahrene Stellung (Z1) entsprechend einem Rücklaufhub, bei dem die genannten Platten auseinandergefahren werden, Mittel um beim Anhalten der genannten Verpackungslinie die genannte Siegelstation (P) in die genannte Vorlaufrichtung (A) der Blisterbahn (3) um die durch genanntes Anhalten verursachte Minderlänge im Verhältnis zur Länge der Blisterbahn bei Dauerbetrieb der genannten Verpackungslinie (4) zu verfahren, und zwar auf einer Strecke zwischen der genannten Siegelstation (P) in der bei Dauerbetrieb der genannten Verpackungslinie eingenommenen Stellung und den genannten Blistervorschubmitteln (50), die sich nach der genannten Vorrichtung befinden; Vorrichtung **dadurch gekennzeichnet, daß** genannte Mittel zum Verfahren der genannten Siegelstation folgendes umfassen: eine Welle (10), drehbar gelagert in einer Längsstange (13), welche den Zweck hat, genannten Rahmen (7) zyklisch zu betätigen, wobei genannte Welle (10) außermittig einen Drehzapfen (12) trägt, der drehbar in einer fest mit dem Rahmen (7) verbundener Querstange (11) aufgenommen ist; mit einer elektronischen Datenverarbeitungseinheit (19) verblockte Betätigungsmittel (14,15,16,16a,17) zur aussetzenden Drehung der genannten Welle (10) entsprechend den von der genannten Datenverarbeitungseinheit (19) bestimmten Winkelwerten, um die längsseitige Verschiebung der genannten zurückgefahrenen Stellung (Z2) zu bewirken; Abtastmittel (18), die mit genannter Datenverarbeitungseinheit verbunden sind, um die Winkelposition der genannten Welle (10) zu erfassen.

2. Vorrichtung nach Anspruch **1, dadurch gekennzeichnet, daß** diese einen elektrisch-elektronischen Apparat (20) umfaßt, der mit genannter Datenverarbeitungseinheit (19) verbunden ist, wobei genannter elektrisch-elektronischer Apparat dazu dient, über genannte Datenverarbeitungseinheit (19) und genannte Betätigungsmittel (17), vorgegebene Drehbewegungen der genannten Welle (10) bei jedem Arbeitstakt der genannten Vorrichtung aufgrund der in genannter Datenverarbeitungseinheit (19) gespeicherten Werte zu bewirken.

3. Vorrichtung nach Anspruch **1, dadurch gekennzeichnet, daß** diese einen Wärmefühler (22) umfaßt, der mit genannter Datenverarbeitungseinheit (19) verbunden ist und dazu dient, die Umgebungstemperatur zu messen, um die Umdrehungen der genannten Welle (10) aufgrund des gemessenen Temperaturwertes zu bestimmen.

4. Vorrichtung nach Anspruch **1, dadurch gekennzeichnet, daß** diese einer Wärmefühler (22) umfaßt, der mit genannter Datenverarbeitungseinheit (19) verbunden ist und dazu dient, die Temperatur der genannten Blisterbahn zu messen, um die Umdrehungen der genannten Welle (10) aufgrund des gemessenen Temperaturwertes zu bestimmen.

5. Vorrichtung nach Anspruch **1, dadurch gekennzeichnet, daß** diese einen Wärmefühler (22) umfaßt, der mit genannter Datenverarbeitungseinheit (19) verbunden ist und dazu dient, die Umgebungstemperatur und die Temperatur der genannten Blisterbahn zu messen, um die Umdrehungen der genannten Welle (10) aufgrund des gemessenen Temperaturwertes zu bestimmen.

6. Vorrichtung nach Anspruch **1, dadurch gekennzeichnet, daß** diese Abtastmittel (21) umfaßt, welche abstandsgleiche Vorsprünge (25) in der genannten Blisterbahn erfassen, wobei genannte Abtastmittel (21) mit genannter Datenverarbeitungseinheim (19) verbunden sind, um die Umdrehung der genannten Welle (10) aufgrund der von den genannten Abtastmitteln erfaßten Vorsprünge zu bestimmen.

7. Vorrichtung nach Anspruch **1, dadurch gekennzeichnet, daß** genannte Betätigungsmittel zur Drehung der genannten Welle (10) ein Zahnrad (14) umfassen, das auf der genannten Welle (10) aufgepreßt ist, wobei ein Zahnriemen (15) mit genanntem Zahnrad (14) sowie mit einem Ritzel (16) im Eingriff steht, dessen Welle (16a) der Abtrieb eines Getriebemotors (17) ist, welcher von der genannten Datenverarbeitungseinheit (19) gesteuert wird.

## Revendications

1. Dispositif de thermosoudage d'un film (2) sur une bande de blisters (3), plus particulièrement en polypropylène, ledit dispositif étant conçu pour fonctionner le long d'une ligne (4) de conditionnement de produits (5) sous blisters obtenus à partir d'une bande (3) en matière thermoformable acheminée le long de ladite ligne, comportant une station de thermoformage des blisters (3a) sur ladite bande (3), une station d'introduction des produits dans lesdits blisters (5), des organes d'alimentation (6), situés en amont dudit dispositif de thermosoudage (1) pour l'acheminement dudit film (2) au-dessus de la bande de blisters (3) et centrés transversalement par rapport à cette dernière, des organes d'avance (50), situés en aval dudit dispositif pour l'acheminement de ladite bande de blisters (3), déjà soucée audit film (2); une structure (7) supportant une plaque de soudage supérieure (8) ainsi qu'une plaque de soudage inférieure (9) munie de cavités (9a) de la forme des blisters (3a), lesdites plaques (8, 9) étant conçues pour serrer ledit film (2) sur la bande de blisters (3) dans la station de soudage (P) où les cavités (9a) de la plaque inférieure (9) sont centrées par rapport aux blisters (3a) de la bande de blisters sous-jacente (3) et ladite structure (7) se déplaçant cycliquement parallèlement au sens de l'avance (A) de la bande de blisters (3), à partir d'une position arrière (Z1), correspondant à ladite station de soudage (P) jusqu'à une position avant (Z2) en effectuant un parcours d'aller pendant lequel lesdites plaques (8, 9) sont maintenues serrées l'une contre l'autre, et de ladite position avant (Z2) à ladite position arrière (Z1) en effectuant un parcours de retour pendant lequel lesdites plaques sont éloignées l'une de l'autre;
des organes pour l'actionnement, en cas d'arrêt de la ligne de conditionnement, de ladite station de thermosoudage (P), dans le sens de l'avance (A) de la bande de blisters (3), en fonction du raccourcissement de la bande de blisters dû audit arrêt et de la longueur de ladite bande de blisters pendant le fonctionnement normal de la ligne de conditionnement (4), comprise entre ladite station de soudage (P) dans la position considérée normale de ladite ligne de conditionnement et lesdits organes d'avance de la bande de blisters (50), située en aval dudit dispositif;
celui-ci étant **caractérisé en ce que** lesdits organes d'actionnement de ladite station de thermosoudage comprennent: un arbre (10) monté et tournant sur une barre longitudinale (13) qui actionne cycliquement ladite structure (7), ledit arbre (10) supportant un pivot excentrique (12) retenu par une barre transversale (11) solidaire de la structure (7); des organes de commande (14, 15, 16, 16a, 17), reliés à une unité de traitement des données (19), qui permettent la rotation intermittente dudit bras (10) selon les valeurs angulaires déterminées par ladite unité de traitement des données (19), de façon à provoquer un déplacement longitudinal de ladite position arrière (Z1); les dispositifs de détection (18), reliés à ladite unité de traitement des données (19), pour la détection de la position angulaire dudit arbre (10).

2. Dispositif selon revendication 1, **caractérisé en ce qu**'il comporte un appareil électrique-électronique (20), relié à ladite unité de traitement des données (19), et conçu pour determiner, par l'intermédiaire de ladite unité de traitement des données (19) et desdits organes de commande (17), la rotation angulaire pré-établie dudit arbre (10) à chaque cycle dudit dispositif en fonction des valeurs stockées dans ladite unité de traitement (19).

3. Dispositif selon revendication 1, **caractérisé en ce qu**'il comporte une sonde thermique (22), reliée à ladite unité de traitement (19) et conçue pour mesurer la température ambiante de façon à déterminer l'ampleur de la rotation dudit arbre (10) en fonction de la valeur de la température mesurée.

4. Dispositif selon revendication 1, **caractérisé en ce qu**'il comporte une sonde thermique (22), reliée à ladite unité de traitement (19) et conçue pour mesurer la température de ladite bande de blisters, de façon à déterminer l'ampleur de la rotation dudit arbre (10) en fonction de la valeur de la température mesurée.

5. Dispositif selon revendication 1, **caractérisé en ce qu**'il comporte une sonde thermique (22), reliée à ladite unité de traitement (19) et conçue pour mesurer la température ambiante et la température de ladite bande de blisters, de façon à déterminer l'ampleur de la rotation dudit arbre (10) en fonction de la valeur de la température mesurée.

6. Dispositif selon revendication 1, **caractérisé en ce qu**'il comporte des dispositifs de détection (21) détectant des proéminences équidistantes (25) sur ladite bande de blisters, lesdits dispositifs de détection (21) étant reliés à ladite unité de traitement des données (19) de façon à déterminer l'ampleur de la rotation dudit arbre (10) en fonction de la détection desdites proéminences par lesdits dispositifs de détection.

7. Dispositif selon revendication 1, **caractérisé en ce que les** organes de commande de la rotation dudit arbre (10) comprennent une roue d'engrenage (14) montée sur ledit arbre (10) avec une clavette, une courroie dentée (15) engagée dans ladite roue d'engrenage (14) et dans un pignon (16) dont l'arbre (16a) est l'arbre de sortie d'un moto-réducteur (17) commandé par ladite unité de traitement des données (19).
